# EUROPEAN PATENT APPLICATION

(11) **EP 1 653 342 A2**
(43) Date of publication of application: **03.05.2006**
(21) Application number: 05256402.8
(22) Date of filing: 14.10.2005
(51) Int. Cl.: G06F 3/14

(54) **Maintenance system for remote display stations**

(30) Priority: 14.10.2004 US 965128
(71) Applicant: Daktronics, Inc., Brookings, SD 57006-5128 (US)
(72) Inventor: Kurtenbach, Reece A., Brookings South Dakota, 57006 (US); Mittan, Thomas R., Brookings South Dakota, 57006 (US); Schulte, Joseph G., Brookings South Dakota, 57006 (US); Gloege, Chad N., Brookings South Dakota, 57006 (US); Luke, Glenn P., Brookings South Dakota, 57006 (US); Schulte, Daniel A., Brookings South Dakota, 57006 (US); Wendler, Brett D., Watertown South Dakota, 57201 (US)
(74) Representative: Miller, James Lionel Woolverton

(57) **Abstract**

A maintenance system for multiple display stations and display controllers (14a-14n), and more particularly, pertains to a system for maintaining multiple large remote graphical display stations (16a-16n) and display controllers, transferring maintenance and status data between display stations and display controllers to a centralized maintenance facility (12) as needed, controlling the transfer of maintenance and control data to remote stations for display and execution, utilizing a long distance data network such as electronic mail or other internet-based system to provide system control and data transfer, and incorporating security features to provide limited access to the system. The system offers enhanced ease of use, more efficient monitoring, maintenance, and updating of software, and much greater flexibility for remote operation than previous systems. The invention also includes a method of maintaining display stations and display controllers, and a business model for providing graphical display maintenance to customers.

## Description

### CROSS REFERENCES TO RELATED APPLICATIONS

None.

### BACKGROUND OF THE INVENTION

### FIELD OF THE INVENTION

The present invention is for a maintenance system for multiple display stations, and more particularly, pertains to a system for maintaining multiple large remote graphical display stations, transferring maintenance and status data between display stations and display controllers to a centralized maintenance facility as needed, controlling the transfer of maintenance and control data to remote stations for display and execution, utilizing a long distance data network such as the internet to provide system control and data transfer, and incorporating security features to provide limited access to the system. The system offers enhanced ease of use, more efficient monitoring, maintenance, and updating of software, and much greater flexibility for remote operation than previous systems. The invention also includes a method of maintaining display stations and display controllers, and a business model for providing graphical display maintenance to customers.

### DESCRIPTION OF THE PRIOR ART

Large graphical display stations have found use in arenas, as rapidly and easily updateable billboards, at large special events, and so forth. These display stations are controlled by a dedicated display controller which sends the desired data to the display station and controls the appearance of the display station. A single display station can be connected to multiple display stations to display the same graphical data or images in multiple locations. For example, an dedicated internal network such as an Ethernet intranet can be used to control one or more display stations. Maintaining correct operation of display stations and display controllers is typically done by physically visiting each display station and display controller to verify correct operation, obtain local status and condition data, provide updated control software and data, and so forth.

### SUMMARY OF THE INVENTION

The general purpose of the present invention is to provide a new way of efficiently maintaining multiple remote graphical display stations and display controllers in a straightforward manner, utilizing hardware and software familiar to users, to allow a user at virtually any location to easily maintain display controllers and graphical display stations, transferring maintenance and control data to and from a centralized maintenance facility.

The present invention allows for efficient maintenance of display controllers and display stations which may be located in multiple remote location. For example, display stations may have a variety of operating condition sensors which determine whether display elements or other display hardware is operating properly. Temperature sensors, ambient condition sensors, power consumption monitors, and so forth can be used to monitor the condition of the display. Software operation can be verified by periodically sending data as controlled by the software; lack of data transfer, or sending of incorrect data, can be used to determine an operation malfunction. These and other types of data can be sent from the display stations, display controllers, or both, to the centralized maintenance facility such as by regular electronic mail, electronic mail initiated only at detection of particular malfunction conditions, or by other methods such as by regular updating of a maintenance web site which is monitored automatically or manually at the centralized maintenance facility.

When particular problems are detected at the centralized maintenance facility, maintenance data or control codes can be sent by the centralized maintenance facility to the particular display station or display controller having the problem, to prompt further action or to correct the problem. For example, a control code which resets malfunctioning hardware or software could be sent. Alternatively, updated control software could be periodically sent from the centralized maintenance facility to all display controllers or display stations of a particular type, such as those of a specific manufacturer or model, those owned by a particular client or type of client, or those in a particular region.

The transfer of such monitoring data, maintenance codes or software updates is typically accomplished by electronic mail, but can also include world wide web, ftp, or other private or public network links as well, in addition to or in place of electronic mail communication.

According to one embodiment of the present invention, there is provided a display maintenance system for display stations and display controllers, including multiple large graphical display stations, multiple display controllers, a centralized maintenance facility, internet-based data transfer between system components, and a security system.

The display stations are large graphical displays such as those utilized in arenas, at large outdoor events and festivals, and as billboard-type displays.

While the primary application is for these large displays and their controllers, the system has application in other areas as well, where smaller displays, monitors, or "tickers" are used; for example, arena hallways or shopping malls may be good locations for smaller versions of the same information display and good applications for use of the present invention.

The display controllers adapted to control the large displays include to Daktronics Venus® controllers such as Venus® 7000, Venus® 1500, and Vplay® controllers. The controllers can be adapted with hardware and software to received data from the internet, including the world wide web, ftp, or electronic mail.

The centralized maintenance facility has large communication bandwidth and large storage capacity. This may be "collocated" equipment where some is owned and maintained by the company maintaining the display station data transfer and control system, and some equipment and internet access is owned and maintained by a specialty data storage or internet provider company. One or more "server" computers can receive maintenance data from the display stations and display controllers, and send updated maintenance data, commands, or software to the display stations and controllers. While a single maintenance facility is typical, a small number of separate facilities could be utilized, to provide backup in case of problems, or to have specialized facilities for particular types of client users. The maintenance facility may be combined with centralized data stores providing data for display on the display stations, or the maintenance facility may be separate from any facility providing data for display.

The internet is utilized to transfer data between the various creation, scheduling, data store, display controller, and display stations. The internet provides an existing network, available at almost any location, often with redundant paths for data transfer. Internet access by standard methods such as telephone, DSL, ISDN, T1, satellite, cable, and so forth can be used, or a combination.

A security system is employed to restrict access to only authorized users. At a minimum, the security system utilizes user names or identity codes and corresponding passwords, with validation required by a central facility such as the centralized maintenance facility. Additional security measures such as hardware or "smart card" keys or additional validation measures can be employed. Use of software with high encryption security is preferred, with use of secure servers at the centralized data store. An additional key aspect of the security system is the ability to recognize which display controllers and which client users are authorized to communicate with the centralized maintenance facility; identity codes must provide command access only for specific display controllers, either by authentication by the controller, or by authentication and routing control by the centralized maintenance facility.

The addition of internet network to the display maintenance system offers synergy, with widespread accessibility of internet networking and data transfer profoundly increasing in the speed, cost-effectiveness, and ease of use over prior display maintenance systems.

The present display maintenance system overcomes limitations of the prior art by providing a simple and reliable system for monitoring, updating, and maintaining display controllers and display stations by a centralized facility.

One significant aspect and feature of the present invention is a system and network with ready access from remote locations, to provide for one or more users at one or more nearby or remote locations to maintain one or more nearby or remote display stations.

Another significant aspect and feature of the present invention is the application of widely-used and readily available computer hardware and software, internet access, and data transfer through the internet.

A further significant aspect and feature of the present invention is a centralized maintenance facility to send and receive data from multiple remote display stations and controllers.

An additional significant aspect and feature of the present invention is a security system to prevent unauthorized access to display controllers.

Still another significant aspect and feature of the present invention is redundant data network paths and redundant system access points.

Yet another significant aspect and feature of the present invention is that multiple users can be supplied with the same maintenance data, and the maintenance data is supplied in a standard format ready for use by the display stations and controllers.

Having thus described embodiments and significant aspects and features of the present invention, it is the principal object of the present invention to provide a system to easily and economically maintain remote display stations.

One object of the present invention is to provide for multiple users at multiple nearby or remote locations the ability to maintain multiple nearby or remote display stations.

Another object of the present invention is to provide users the ability to maintain display stations using readily available and economical hardware, software, and communication network.

A further object of the present invention is to provide users with a centralized source of maintenance data and software for use by display stations and controllers.

An additional object of the present invention is to provide a high degree of security to prevent unauthorized access to display controllers.

Still another object of the present invention is to provide increased system reliability.

Yet another object of the present invention is to provide increased system efficiency.

### BRIEF DESCRIPTION OF THE DRAWINGS

Other objects of the present invention and many of the attendant advantages of the present invention will be readily appreciated as the same becomes better understood by reference to the following detailed description when considered in connection with the accompanying drawings, in which like reference numerals designate like parts throughout the figures thereof and wherein:

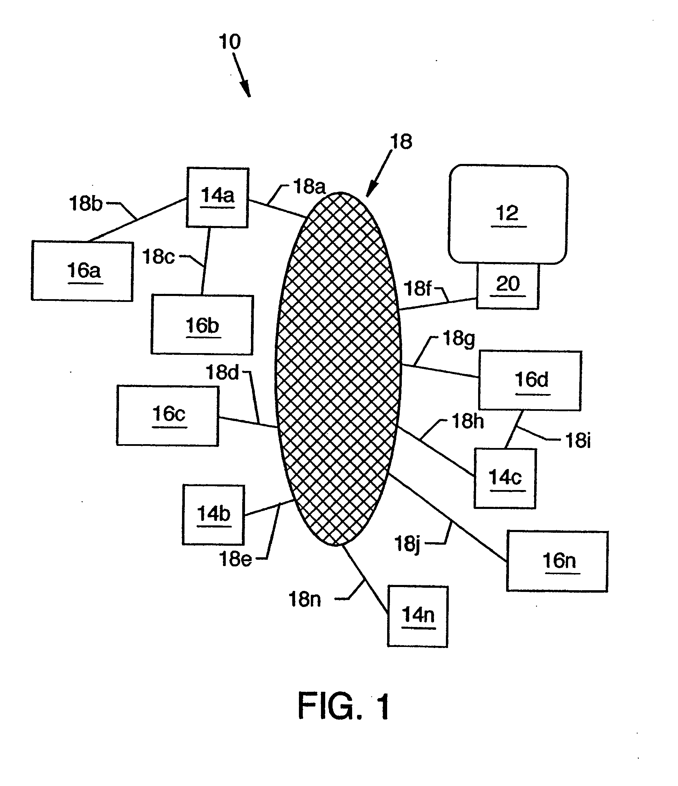

FIG. 1 illustrates a display maintenance system, the present invention.

### DETAILED DESCRIPTION OF THE PREFERRED EMBODIMENTS

**FIG. 1** illustrates a typical form of the first embodiment of the present invention. Display maintenance system 10 includes centralized maintenance facility 12, multiple display controllers 14a-14n, multiple display stations, 16a-16n, multiple network links 18a-18n, and security system 20.

Display maintenance system 10 allows many independent users to maintain their display stations and display controllers, which may be located at various locations in the United States or worldwide, without requiring personal visit to each location, by utilizing multiple network links 18a-18n such as the internet for data transfer between a centralized maintenance facility 12 and the various display controller 14a-14n and display station 16a-16n locations. By use of appropriate access restrictions and security features such as security system 20, users can access all or selected maintenance services from a centralized maintenance facility 12. For example, a permanent or limited-duration contract or a periodic subscription purchased or granted to the user can allow access to specific maintenance data, software updates, and so forth. Access to the maintenance services and data is provided through multiple network links 18a-18n but restricted by security system 20 to authorized users or authorized display stations and controllers, such as those for which an appropriate maintenance contract or subscription exists.

A further efficiency is provided by centralized maintenance facility 12. Since much of the same data will be needed by multiple independent users for maintenance of their display stations 16a-16n and controllers 14a-14n, it can be much more efficient to prepare and distribute maintenance data or software once, distributing it to multiple users, display stations, and display controllers in a single operation, such as by a mass electronic mailing to all display controllers of a particular type, or updating a maintenance web page. Operating status and condition data can be sent from multiple display stations and display controllers to a centralized repository at the centralized maintenance facility to facilitate detection and diagnosis of any problems that may be occurring on particular types of display stations or display controllers. Centralized maintenance facility 12 may be combined with a centralized data store, a data interface and distribution facility, a data delivery system, or a display control system (not shown) for efficiency, or may be a separate facility or may be distributed among a small number of distinct facilities such as for maintenance of particular types of display controllers or particular types of clients, for example.

Display controllers 14a-14n, such as the Venus® controller by Daktronics, are used to control one or multiple display stations 16a-16n. A display controller 14 may be located with one or more display stations 16a-16n. Alternatively a display controller 14 may control multiple remote display stations 16a-16n, connected by additional network links 18a-18n. These additional network links can be internet links; a common variation, however, is to have display stations 16a-16n connected by an intranet or internal or private communication network. Since the function of the additional network links, private intranet or internal or private communication network links are similar, they are not distinguished from the, general network links 18a-18n in **FIG. 1.**

### MODE OF OPERATION

As depicted in **FIG. 1,** display stations can be connected directly through network links 18 to the centralized maintenance facility 12 via security system 20; for example, display station 16c is connected through link 18d and so forth. Alternatively, display stations can be connected only through their display controller; for example, display stations 16a and 16b are connected only to display controller 14a through links 18b and 18c, and controller 14a provides for connection to centralized maintenance facility 12 via security system 20 through link 18a and so forth. Still another alternative is to provide connection for display stations directly and through their display controller; for example, display station 16d is connected directly through link 18g and so forth, and is also connected through display controller 14c through links 18h and 18i and so forth. Further, display maintenance system 10 can be combined with an internet-based display control system in which the internet provides the connections between the display controller and display stations as well as providing connections to a centralized maintenance facility or any other components; for example, display controller 14b can be used to control display station 16c through the internet and links 18e and 18d and so forth, as connection between display controller 14b and display station 16c and centralized maintenance facility 12 via security system 20 are also provided by the internet and through links 18d, 18e, 18f and so forth. The hashed oval area indicated as 18 on FIG. 1 is intended to depict multiple interconnected network links such as those provided by the internet. Some or all of links 18 in FIG. 1 could be provided specifically by electronic mail communication, although other electronic communication means can be used as well.

Display stations 16a-16n actually display the graphical information. They are typically very large displays such as for arenas, updateable billboards, large special events, and so forth. Display stations 16a-16n can include smaller displays, monitors, or "tickers" incorporated into display maintenance system 10 in a similar manner.

Network links 18a-18n are typically provided by the internet, where data is sent through multiple interconnected paths. In many cases, there are multiple independent links provided by different service providers, internet backbones, and the like, which provides a degree of redundancy to provide for data transmission even if a particular link is not functioning properly. A typical configuration utilizes electronic mail to transfer data or software between the centralized maintenance facility and the multiple display stations and display controllers. Alternatively, the world wide web, ftp or other file transfer, the "new" internet in development, other wired or wireless communication networks, or a satellite communication network or other network could be utilized instead, or a combination of network types could be used. Internet access by standard methods such as telephone, DSL, ISDN, T1, satellite, cable, and so forth can be used, or a combination. Alternative access methods are envisioned, including portable wireless devices, pda devices, mobile telephones with data transmission and display capabilities, portable or laptop computers, or other internet devices and the like.

Security system 20 is employed to restrict access to only authorized users. At a minimum, the security system utilizes identity codes, with validation required by a central facility such as the centralized maintenance facility. Each access to centralized maintenance facility services or data will require authentication by security system 20. An additional key aspect of the security system is the ability to recognize which display controllers to allow access; at a minimum, identity codes must provide access only for specific display controllers, either by authentication by the controller, or by the centralized maintenance facility. Security system 20 coordinates with license or subscription information to provide appropriate access.

Particular components of display maintenance system 10 may have additional security features to satisfy specific requirements. For example, particular clients may be provided with special unique software keys known only to that client's display stations and display controllers. Additional security measures such as hardware or "smart card" keys or additional validation measures can be employed as well.

Various modifications can be made to the present invention without departing from the apparent scope hereof.

### DISPLAY MAINTENANCE SYSTEM PARTS LIST

- 10: display
maintenance
system
- 12: centralized
maintenance
facility
- 14a-n: display
controllers
- 16a-n: display stations
- 18a-n: network links
- 20: security system

## Claims

1. A display maintenance system for display stations for multiple client users comprising:
a. multiple large graphical display, stations;
b. multiple display controllers adapted to receive data from the internet, each configured to control one or more display stations for a client user;
c. a centralized maintenance facility accessible from the internet, for receiving maintenance data from said multiple display controllers and transmitting maintenance data, commands or software to said multiple display controllers;
d. internet-based data transfer between centralized maintenance facility and said multiple display controllers; and,
e. a security system restricting access to the centralized maintenance facility to only authorized users and authorized display controllers, and restricting access to display controllers to only authorized users.

2. A method of maintenance of remote display stations for multiple client users comprising:
a. providing a display maintenance system including multiple network links, at least one centralized maintenance facility adapted to send and receive information to and from remote display controllers, and at least one security system;
b. providing user access to the display maintenance system through said at least one security system;
c. receiving data sent from remote display controllers through said multiple network links by said at least one centralized maintenance facility;
d. sending data, which may include commands or software, from said at least one centralized maintenance facility to remote display controllers through said multiple network links;
e. providing internet-based data transfer between said at least one centralized maintenance facility and remote display controllers; and,
f. utilizing said at least one security system to restrict access to system components and data to only authorized use.

3. The method of claim 2, further comprising the steps of:
a. receiving data sent from remote display stations through said multiple network links by said at least one centralized maintenance facility; and,
b. sending data, which may include commands or software, from said at least one centralized maintenance facility to remote display stations through said multiple network links.

4. A method of conducting business comprising the steps: of:
a. providing a display maintenance system including multiple network links, at least one centralized maintenance facility adapted to send and receive information to and from remote display controllers, and at least one security system;
b. providing user access to the display maintenance system through the internet; and,
c. providing data for maintenance of display controllers or display stations to users for a fee.

5. A method of maintaining remote display stations for multiple client users comprising:
(a) providing a display maintenance system including multiple networks links, at least one centralised maintenance facility adapted to send and receive information to and from remote display controllers, and at least one security system;
(b) accessing the display maintenance system through the internet; and
(c) maintaining display controllers or display stations by providing data to authorised users.

6. A method as claimed in claim 5 which includes authorising users by fee payment.
